Europäisches Patentamt

European Patent Office

Office européen des brevets

(19)

(11) Veröffentlichungsnummer: **0 200 712**
**A1**

## (12) EUROPÄISCHE PATENTANMELDUNG

(21) Anmeldenummer: 86890067.1

(22) Anmeldetag: 20.03.86

(51) Int. Cl.⁴: **H02P 5/172** , H02P 5/175

(30) Priorität: 16.04.85 AT 1144/85

(43) Veröffentlichungstag der Anmeldung:
10.12.86 Patentblatt 86/45

(84) Benannte Vertragsstaaten:
AT CH DE FR GB IT LI NL SE

(71) Anmelder: SIEMENS AKTIENGESELLSCHAFT
ÖSTERREICH
Siemensstrasse 88 - 92
A-1210 Wien(AT)
Anmelder: Siemens Aktiengesellschaft Berlin
und München
Wittelsbacherplatz 2
D-8000 München 2(DE)

(72) Erfinder: Hackl, Franz, Dipl.-Ing.
Klein Pertholz 6
A-3664 Martinsberg(AT)
Erfinder: Wöhrer, Franz, Dipl.-Ing.
Kainzenbergerstrasse 2
A-4040 Puchenau(AT)

(54) Messglied zur Ermittlung der Gegenspannung elektrischer Motoren.

(57) Zur Regelung von Gleichstrommotoren, die mit einem durch Phasenanschnitt bemessenen Ankerstrom gespeist sind, eignet sich in besonderer Weise die im Motor induzierte Gegenspannung. Diese wird auf indirektem Wege durch ein Meßglied errechnet, das aus einem Mikroprozessor 3 besteht, der die momentane Gegenspannung der Gleichstrommaschine als Funktion des im vorangegangenen Rechenzyklus berechneten Phasenanschnittwinkels, des gemessenen Stromflußwinkels, der gemessenen Größe der Netzspannung, des Ankerstrommittelwertes und des maschinenspezifischen Ankerkreiswiderstandes berechnet.

## Meßglied zur Ermittlung der Gegenspannung elektrischer Motoren

Gegenstand der Erfindung ist eine Meßglied zur Ermittlung der Gegenspannung elektrischer Motoren, das insbesondere für die Regelung von Gleichstrommaschinen geeignet ist, die mit einen durch Phasenanschnitt bemessenen Ankerstrom gespeist sind.

Gleichstrommotoren, die in Werkzeugmaschinen eingesetzt sind, unterliegen einerseits starken Belastungsschwankungen und müssen anderseits sehr rasch veränderlichen Betriebsbedingungen angepaßt werden. Dies erfordert eine Regelung unter Zuhilfenahme eines Parameters, der den jeweiligen Betriebszustand des Motors in besonders charakteristischer Weise zu erfassen gestattet. Als Parameter eignet sich erfahrungsgemäß am besten die im Motor erzeugte Gegenspannung, die sowohl von der magnetischen Durchflutung als auch von der Drehzahl des Motors abhängt.

Die explizite Darstellung der Gegenspannung, die in bestimmten Betriebszuständen auch für die Steuerung des Motorfeldes benötigt wird, ist vor allem für die Bemessung des Ankerstromes und somit für die Bemessung des Phasenanschnittes erforderlich.

Die Erfindung hat sich die Aufgabe gestellt, für die Ermittlung der Gegenspannung ein Meßglied zu schaffen, das diese mit einem möglichst geringen Aufwand an Meßeinrichtungen erbringt, ohne daß hierzu die Ankerspannung direkt gemessen werden muß. Erfindungsgemäß ist hierzu ein Mikroprozessor vorgesehen, der die momentane Gegenspannung der Gleichstrommaschine als Funktion des im vorangegangenen Rechenzyklus berechneten Phasenanschnittwinkels, des gemessenen Stromflußwinkels, der gemessenen Größe der Netzspannung, des Ankerstrommittelwertes und des maschinenspezifischen Ankerkreiswiderstandes berechnet. Gemäß weiteren Merkmalen der Erfindung wird der Mittel wert des Ankerstromes mittels eines in den Ankerstromkreis eingeschalteten Gleichstromwandlers und der Mittelwert der Netzspannung mittels eines Transformators aus der verketteten Spannung zweier Phasen des speisenden Drehstromnetzes gewonnen. Der jeweilige Stromflußwinkel wird zweckmäßig mittels eines an den Gleichstromwandler angeschlossenen Komparators als Zeitdifferenz zwischen den Vorder-und Rückflanken des Komparatorausgangs gemessen.

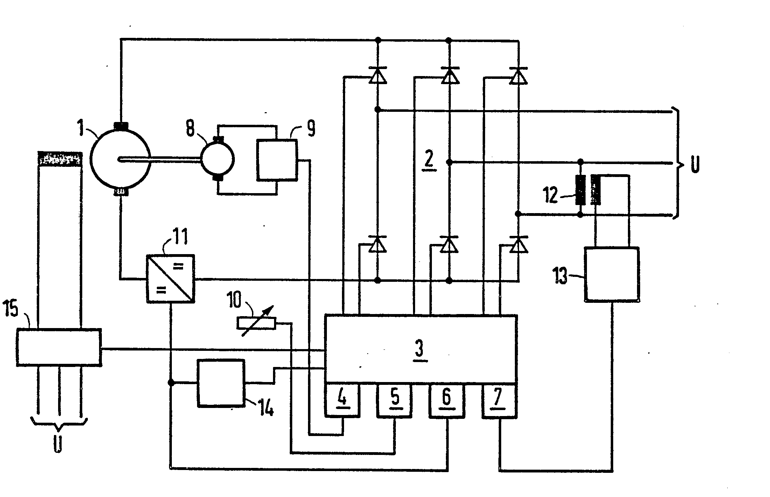

Als Ausführungsbeispiel der Erfindung ist in der Zeichnung das Meßglied eines Reglers für einen eine Werkzeugmaschine antreibenden Gleichstrommotor 1 dargestellt. Die Speisung des Motors 1 erfolgt aus dem Drehstromnetz mit Hilfe einer Phasenanschnittschaltung 2. Die dargestellte Phasenanschnittschaltung 2 ist zur Lieferung eines Motorstromes von nur einer Richtung geeignet. Wenn daher für den Motor 1 auch unterschiedliche Stromrichtungen möglich sein sollen, ist eine zweite Phasenanschnittsteuerung vorgesehen, die der Phasenanschnittschaltung 2 parallel zu schalten ist, jedoch mit entgegengesetzter Durchlaßrichtung ihrer Thyristoren.

Die Thyristoren der Phasenanschnittschaltung werden einzeln von einem Mikroprozessor 3 angesteuert, der unter den sich fortwährend ändernden Bedingungen in einem vorgegebenen Takt den jeweils geltenden Phasenanschnittswert von neuem errechnet und in Form von Einschaltimpulsen den Thyristoren vermittelt. Mit 4, 5, 6 und 7 sind dem Mikroprozessor 3 vorgeschaltete Analog-Digital-Wandler bezeichnet, in denen die für die Berechnungen der Phasenanschnittswerte erforderlichen Eingabewerte in Digitalzahlen umgesetzt werden.

Die Steuerung der Thyristoren kann nach verschiedenen Gesichtspunkten erfolgen, entweder in Form einer Regelung der Motordrehzahl auf einen konstanten Wert oder aber auf ein konstantes Drehmoment. Bei Drehzahlregelung ist eine Erfassung des Drehzahl-Istwertes des Motors 1 erforderlich, der eine vom Motor 1 angetriebene Tachodynamomaschine 8 dient, deren Ausgangssignal von einem Umsetzer 9 in eine analoge Spannung umgesetzt wird, die dem Analog-Digital-Wandler 4 zugeführt wird. Mittels eines Stellorganes 10 wird ein Drehzahl-oder Strom-Sollwert vorgegeben, der in eine Spannung umgesetzt dem Analog-Digital-Wandler 5 zugeführt wird und von diesem als Digitalzahl in den Mikroprozessor 3 eingebracht wird.

Die Berechnung der Gegenspannung erfordert die Kenntnis des Phasenanschnittwinkels, der aber nicht gemessen werden muß, da er im Mikroprozessor 3 noch als Speicherwert nach dem zuletzt durchgeführten Rechenzyklus vorliegt.

Der Ankerstrom des Motors 1 wird mittels eines Gleichstrom-Gleichstrom-Wandlers 11 erfaßt, dessen Ausgangsgröße vom Analog-Digital-Wandler 6 abgetastet und in vom Mikroprozessor 3 erfaßbare Digitalzahlen umgesetzt wird, aus denen der Strom-Mittelwert berechnet wird.

Weiters ist zur Berechnung der Gegenspannung noch die Größe der Netzspannung erforderlich. Diese wird von der speisenden Dreiphasenspannung U als verkettete Spannung zweier Phasen mittels eines Transformators 12 erfaßt. Von einer Auswerteschaltung 13 wird daraus der zeitliche Mittelwert gebildet, der dem Analog-Digital-Wandler 7 zugeführt wird.

Der Ankerstrom eines durch Phasenanschnitt gesteuerten Gleichstrommotors ist kuppenförmig und lückt bei kleinen Stromwerten, d.h. zwischen zwei Thyristorzündimpulsen gibt es einen Zeitabschnitt, innerhalb desesen die Thyristoren keinen Strom führen. Zur Messung des Stromflußwinkels, der im stationären Betrieb zwischen 0° und 60° variieren kann, dient ein Komparator 14, der vom Signal des Gleichstromwandlers 11 ein Signal ableitet, das anzeigt, daß gerade ein Strom fließt. Die Zeitspanne zwischen den Vorder-und Rückflanken dieses Signales gibt den Stromflußwinkel an. Der Mikroprozessor 3 leitet aus dem Ausgangssignal des Komparators 14 durch Zeitdifferenzmessung den Stromflußwinkel ab.

Die Berechnung der Gegenspannung verwendet noch den Ankerkreiswiderstand, der für den betreffenden Motor spezifisch ist.

Mit 15 ist ein Stellorgan für die Bemessung des Feldstromes des Motors 1 bezeichnet, das beispielsweise bei Feldschwächbetrieb die Kenntnis der Gegenspannung benötigt.

Bezugszeichenliste

1 = Gleichstrommotor

2 = Phasenanschnittschaltung

3 = Mikroprozessor

4,5,6,7 = Analog-Digital-Wandler

8 = Tachodynamomaschine

9 = Umsetzer

10 = Stellorgan

11 = Gleichstrom-Gleichstrom-Wandler

12 = Transformator

13 = Auswerteschaltung

14 = Komparator

15 = Stellorgan

**Ansprüche**

1) Meßglied zur Ermittlung der Gegenspannung elektrischer Motoren, insbesondere für die Regelung von Gleichstrommaschinen, die mit einem durch Phasenanschnitt bemessenen Ankerstrom gespeist sind, **gekennzeichnetdurch** einen Mikroprozessor (3), der die momentane Gegenspannung der Gleichstrommaschine (1) als Funktion des im vorangegangenen Rechenzyklus berechneten Phasenanschnittwinkels, des gemessenen Stromflußwinkels, der gemessenen Größe der Netzspannung, des Ankerstrommittelwertes und des maschinenspezifischen Ankerkreiswiderstandes berechnet.

2) Meßglied nach Anspruch 1, **dadurch gekennzeichnet,** daß der Mittelwert des Ankerstromes mittels eines in den Ankerstromkreis eingeschalteten Gleichstromwandlers (11) gewonnen wird.

3) Meßglied nach Anspruch 1 oder 2, **dadurch gekennzeichnet,** daß die Größe der Netzspannung (U) mittels eines Transformators (12) aus der verketteten Spannung zweier Phasen des speisenden Drehstromnetzes gewonnen wird.

4) Meßglied nach Anspruch 2 oder 3, **dadurch gekennzeichnet,** daß der jeweilige Stromflußwinkel mittels eines an den Gleichstromwandler (11) angeschlossenen Komparators (14) als Zeitdifferenz zwischen den Vorder-und Rückflanken des Komparatorausgangs gemessen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 058 891 (FUJI ELECTRIC) <br> * Figur 1; Patentansprüche * | 1 | H 02 P 5/172 <br> H 02 P 5/175 |
| A | | 2 | |
| Y | DE-A-2 731 503 (M.J. PISTRAK et al.) <br> * Insgesamt * | 1 | |
| A | REGELUNGSTECHNIK, Band 30, Nr. 11, November 1982, Seiten 378-386; P. MAGYAR et al.: "Digitale Regelung und Steuerung einer stromrichtergespeisten Gleichstrommaschine mit Mikrorechner" | | |
| A | DE-B-2 608 613 (LICENTIA) | | |

RECHERCHIERTE SACHGEBIETE (Int. Cl.4)

H 02 P

Der vorliegende Recherchenbericht wurde für alle Patentansprüche erstellt.

| Recherchenort | Abschlußdatum der Recherche | Prüfer |
|---|---|---|
| DEN HAAG | 01-07-1986 | BEYER F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82